Europäisches Patentamt

European Patent Office

Office européen des brevets

(19)

(11) Publication number: **0 100 131**
**A1**

(12) # EUROPEAN PATENT APPLICATION

(21) Application number: **83201099.5**

(22) Date of filing: **26.07.83**

(51) Int. Cl.³: **F 03 D 1/06**

(30) Priority: **28.07.82 NL 8203016**

(43) Date of publication of application: **08.02.84**
**Bulletin 84/6**

(84) Designated Contracting States: **BE DE IT**

(71) Applicant: **Stichting Energieonderzoek Centrum Nederland, Scheveningseweg 112, NL-2584 AE 's-Gravenhage (NL)**

(72) Inventor: **Draijer, Wiebe, Singravenlaan 13, NL-7531 JB Enschede (NL)**

(74) Representative: **Kooy, Leendert Willem et al, OCTROOIBUREAU VRIESENDORP & GAADE P.O. Box 266, NL-2501 AW The Hague (NL)**

(54) **Method for manufacturing blades for axial fans and wind turbines.**

(57) A continuously manufactured profile having maximum curvature and chord with a constant torsion and a constant section, can be reshaped to obtain the required curvature, the required chord and the required correction on the position angle by modification of a relatively small part of the tail of the profile. This discovery enables mass production and stocking of profile to be mounted as blades on axial fans and windturbines of a wide capacity range.

windturbine    ventilator

-1-

METHOD FOR MANUFACTURING BLADES FOR AXIAL FANS AND WINDTURBINES

The present invention relates to a method for manufacturing blades for axial fans and axial windturbines, in which the curvature and chord length of the wing profile vary along the wing radius in such a way that the position of a fixed common co-ordinate in the profiles shows a continuous distributed torsion.

Large low pressure fans, of the kind which is used e.g. in cooling towers, usually are axial fans with a slight hub to tip diameter ratio and a relatively high specific number of revolutions (high speed), on account of which they are provided with slim wings mostly showing a streamlined shape in the wing sections.

Windturbines of the kind which is in full development now (as e.g. the experimental 25 m-horizontal axis windturbine on the ECN-area at Petten) are axial turbines, also with a slight hub to tip diameter ratio and a high specific speed. Also these flow machines are provided with distinctly slim blades having streamlined wing sections.

For both types of flow machines usually the streamlined section of the long slim blades are designed and embodied as airplane-wing profiles, the shape and position on all radii of which are determined by using results of theoretical and experimental search

-2-

to be found in public literature (like "Aerodynamische Profile" by F.W. Riegels).

The shape and position of such profiles determine, together with the size thereof and the number of revolutions, the full flow behaviour of those flow machines in the operational plane (actuator disc). A careful calculation of these parameters as a base of the design generally results in a high efficiency machine. Such a design calculation is substantially directed, after determination of principal dimensions, to the minimalization of the losses, like profile resistance, induced resistance, loss by tangential velocities and other frictional or whirl losses.

An optimum blade shape in most cases can be constructed from any kind of material and according to any method. If the choice therefrom imposes no particular restrictions to the designer, he will generally be free to arrange all blade parameters in such a way that an aerodynamically optimum machine is created. Therewith very many arrangements are equivalent alternatives to one another. However, if the design is also optimalized as to other than exclusively aerodynamic parameters, e.g. life, strength, cost price, noise, safety, etc., then the number of possible alternative arrangements of blade parameters is descreased soon and sometimes is reduced to zero, which means that the designer has to make concessions, resulting in a lower efficiency. Especially cost price is an alternative limiting parameter, both absolutely (best performance for lowest cost price) and relatively (machine cost price should be able to stand up to that of competitors).

According to the invention one and another is achieved in that a profile with maximum curvature and chord with a constant torsion and a constant section is manufactured continuously from e.g. a glass-reinforced plastic or kneadable aluminium alloy, and in that

-3-

the required curvature, the required chord and the required correction on the position angle are obtained by modification of a relatively small part of the tail of the profile.

It seems to be possible that the continuous manufacture takes place by torsional pulltrusion of e.g. glass-reinforced plastic, but it is also possible that the continuous manufacture takes place by extrusion and subsequent deformation with a regular torsion after the extrusion has been performed.

The invention will be elucidated herebelow from some diagrams and cross-sections which are important for the invented method. In the drawing:

figure 1 shows vector diagrams of a windturbine and a fan,
figure 2 shows a number of cross-sections of a blade,
figure 3 shows a diagram of the relation between angle of incidence and lift coefficient of the blades according to the invention,
figure 4 shows a polar diagram of the relation between air resistance coefficient and slide angle,
figure 5 shows a diagram of the relation between angle of incidence and the product of chord ratio and lift coefficient, and
figure 6 shows a number of drawings which are used for elucidation of the design steps in order to come to regularly torsioned blades according to the invention.

After converting all requirement, which an axial flow machine should meet, into principal dimensions and number of revolutions (angular velocity) a summary is created of the relative air velocities to which all wing sections will be exposed under various operational conditions.

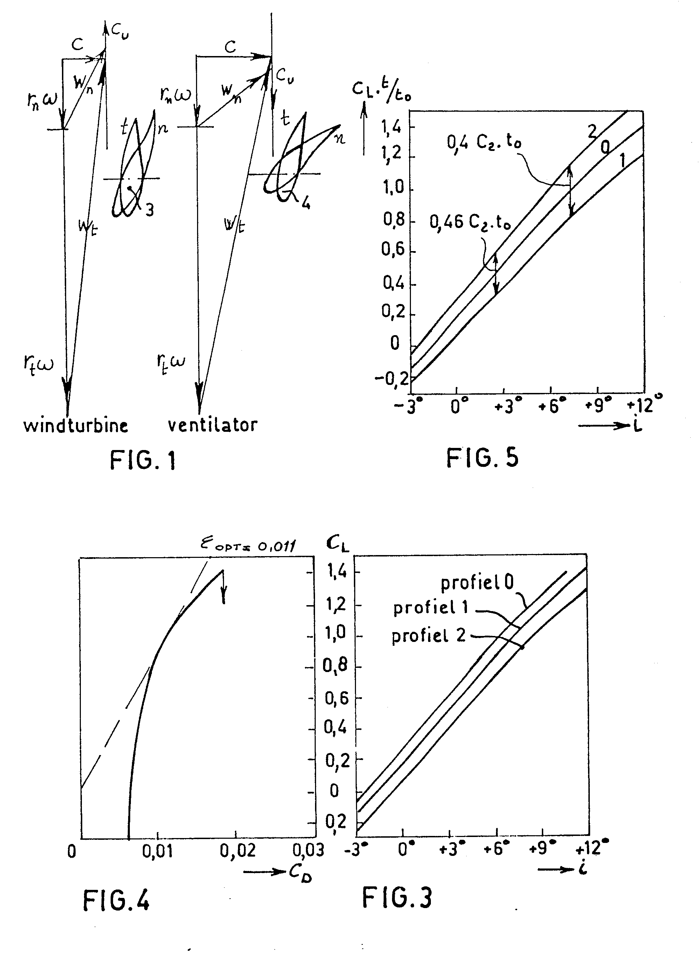

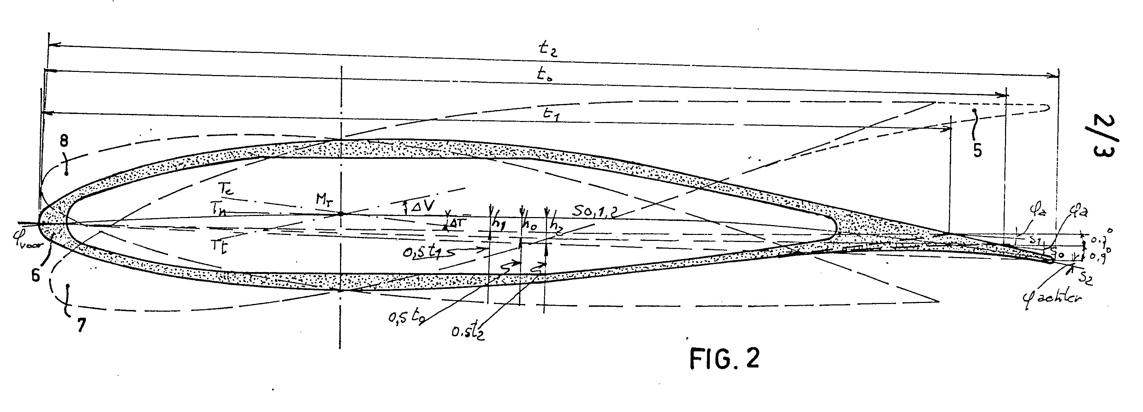

Figure 1 shows simplified velocity vector diagrams for the wing sections on the hub (n) and those on the tip (t) for both a windturbine 3 and a fan 4; the relative velocities w on hub and tip follow from the inlet velocities c, the circumferential velocities $r\omega$ (r = radius, $\omega$ = angular velocity) and the tangential speed components $c_U$. All wing sections between hub and tip are subjected to still other relative velocities; only the extremes are shown here.

From the diagrams of figure 1 it can be seen that the magnitude and direction of the relative velocity w strongly decline from the hub to the tip. Both the magnitude as the shape and the position of the wing sections, which, moreover, will have to show an angle of incidence i running along the radius with respect to the relative velocity vectors, show still other values on all radii. Therefore, it is a known phenomenon that blades of good windturbines and good axial fans have a rather strong torsion from hub to tip, and that both the chord and the curvature of the wing profiles are nowhere the same. In this connection it is important that the specific wing torsion (in degrees per metre of wing length) turns out to be different on all radii.

Come so far the moment has arrived on which the designer has to make decisions as to the arrangements of all profile variables on all radii. He is supposed to dispose of all calculating methods which are the vogue for aerodynamically analysing and designing axial machines and which can be found in the literature. As variable parameters are presented: the chord t of a wing profile, the shape and properties of wing profiles, in which countless variations are possible, the number of wings 2, and the angle of incidence i, determining the position of the not yet known profile with respect to the relative velocities which are different on all radii. In the choice procedure the angle of incidence i feeds back to the profile properties, especially to the lift coefficient $C_L$ and the slide angle $\varepsilon$ of the profile, which is strongly determining for the efficiency. In fact each coherent arrangement is possible, provided that after performance it is checked as to the requirements and the minimalization of losses. Other than aerodynamic considerations finally determine the choice from the many possibilities, It should be possible to manufacture the blade (cost price variable), the blade should be adapted to resist occurring loads (strength and oscillations), it should be proof against affection of the shape (corrosion, erosion, wear, damage) and against affection of the position (rigidity), it may not argue the safety (e.g. lightning-safe), it may not cause radio or television disturbances or cause damage to birds of passage (with windturbines).

Each of these considerations and conditions require their often complicated calculations, which may lie in the field of applied mechanics, aero-elasticity, oscillations, material knowledge, chemical technology and economy. No single design may ever pretend to be the only optimum design; it may be the lowest in cost price and otherwise in conformity with the further requirements.

The invention to be discussed now relates to an optimalization of aerodynamic properties and cost price. Blades manufactured according to the invention meet all further requirements upon a right dimensioning.

Between the collection of possible aerodynamically optimum profile chord, shape, angle of incidence, position and number on all radii there are some in which the chord slightly declines from hub to tip and the curvature of the profiles slightly declines outwardly. The torsion in the position of the profiles is not constant then along the radius, but diminishes outwardly. A constant torsion would give a bad efficiency and would cause incalculable radial flow disturbances, a fortiori if it would be combined with a constant chord, a constant curvature and a constant shape. For the description of the aerodynamic behaviour of such a blade any theory is lacking; an approximation thereof shows that great losses would occur. However, it is possible indeed to see how curvature and chord should vary along the radius in order to make the position of a fixed common co-ordinate in the profiles show a continuously distributed torsion.

If for such a fixed co-ordinate the tangent on the curvature is chosen in any point of the wing profiles, and particularly the point about which the wing profiles can rotate during blade adjustment, the line of connection of all these centres $(M_T)$ (vide figure 2) also forms the torsion axis. About said axis the torsion of the said co-ordinate tangent T is regularly distributed along the wing radius, but chord and curvature are declining.

According to the invention by means of e.g. pulltrusion a profile with maximum curvature and chord with a constant torsion and a constant section in unlimited length is manufactured from e.g. glass-reinforced plastic and the required curvature, the required chord and the required correction on the position angle is obtained by modification afterwards of a small part of the tails of the profile. Herewith very slight modifications having a great effect are concerned.

Moreover, the modification seems to be simply practicable. Firstly the strip about which the chord apparently has to be shortened is removed for instance by sawing, and thereafter a wall thickness is removed little by little, for instance by grinding, so that the tail edge becomes about 1 mm in thickness again.

Thereby the producing in mass or in larger series of aerodynamic high-grade blades to low cost price becomes possible, whereas

0100131

-7-

otherwise the wings can meet all requirements as to strength, rigidity, corrosion and erosion resistance and freedom of disturbances (radio, television).

In figure 2 a wing profile made by torsioned pulltrusion is shown in a dot-shaded section. The external contour which is determining for the aerodynamic behaviour, profile 2, is obtained by representing a good symmetrical profile (to be transformed affinely) on a curved skeleton line $S_2$ intersecting the line of connection between nose 6 and tail 5 there at angles $\phi_V$ and $\phi_A$. If the skeleton line would be an arc, $\phi_V = \phi_A = \frac{1}{2} \phi$, whereby $\phi$ is the angle describing the arc of the skeleton line. In the present invention $\phi_V$ is not equal to $\phi_A$. The skeleton line is a circle indeed for about 70 % of the chord, but is somewhat more curved for the latter 30 %. The declination of the curvature caused thereby is indicated in table A both in $\phi_{front}$ and $\phi_{rear}$ and in h, the curvature height on half the chord.

TABLE A

| Data | Profile 0 | Profile 1 | Profile 2 |
|---|---|---|---|
| Chord t | 100 % | 93.8 % | 105.2 % |
| $\phi_{front}$ | $4.5^{\circ}$ | $3.8^{\circ}$ | $5.4^{\circ}$ |
| $\phi_{rear}$ | $4.8^{\circ}$ | $2.0^{\circ}$ | $7.5^{\circ}$ |
| curvature $\phi$ | $9.3^{\circ}$ | $5.8^{\circ}$ | $12.9^{\circ}$ |
| curvature h | 0,0203t | 0,0127t | 0,0282t |
| position | $0^{\circ}$ (ref.) | $-0.7^{\circ}$ | $+0.9^{\circ}$ |
| shape: from nose to 70 %t NACA 642-216 ($t_o$) | | | |

These data are only meant as an example.

In the shown example the curvature height h of the designed pulltrusion profile becomes 2,82 % of the chord $t_2$. The aerodynamic properties of this profile 2 can be calculated exactly and are represented in diagram in the figures 3 and 4. The full profile is meant and suited for a section on the hub. For a fan and for a windturbine also a tip profile 7 or 8 respectively is shown. The full profile is pulltruded with a constant specific torsion in a way to be elucidated hereinafter.

By cutting off a part corresponding with the wing length (wing-span) after manufacture of the profile (in principle endless), a wing with constant torsion, chord and curvature is obtained. That is, as already remarked, an aerodynamically bad wing.

The present invention is characterized in that the pulltruded profile 2 has been designed in such a way that by correction of the outermost tail part 5 other also aerodynamically good profiles with other position angles, curvatures and chords are created, which together result in an optimum wing.

These are represented in figure 2, by way of example as the profiles 0 and 1, the properties of which can also be calculated exactly. Also these properties are represented in the diagrams in figure 3 and 4. By comparing the ideal torsioning on each radius of the blade with the torsioning provided by the pulltrusion procedure it can be calculated, through the profile properties, which correction should be made on the tail by removal of material. Thereby the large choice space for the designer appears from figure 5, in which the product of chord ratio and lift coefficient for different angles of incidence is represented. In the example described here a variation in the $C_L$-chord product of 46% is created, at $C_L$-values of about 0.5, which product is reduced up to 40 % at $C_L$-values of about 1.0. Owing to this variation space it becomes possible to make an aerodynamically optimum blade, which, when manufactured in series, has a very low cost price.

On the other hand the regular torsion to be applied in the pulltruded profile will be determined, in dependence on the machine design, by the limits of above mentioned variation in the $C_L$-chord product. For instance for fans at equal hub to tip diameter ratio usually a greater regular torsion of the pulltruded blade will be necessary than with windturbines, which can be easily seen from figure 1.

From fans to windturbines the sign of the torsion vector is reversed. In the cases wherein the regular torsion of fans and turbines could be equal, for both machines the same pulltrusion profile can be used, but the direction of rotation of the two machines built in this way is different then. Also in this regard the invention may cause great savings of expenses, particularly when an industry considers both types of machines, in spite of the great differences in market, to belong to its production program.

The pulltrusion of prismatic boxlike profiles is known in principle. A hollow profile is made by drawing glass or carbon fibre reinforcement between an outer die and an inner die while adding plastic (polyester, polyurethane or epoxides), which is mixed with all necessary components (hardeners, catalysts). By heating the dies the plastic is hardened while being drawn through and while enclosing the fibre reinforcement. Almost all shapes, also hollow shapes divided in more cells, can be made in this way - in principle endless - with high reinforcing contents. Fabrics or chopped fibres can be drawn therewith in order to give transverse strength. The longitudinal strength and bending strength of the hollow profiles are high and can be compared with those of aluminum extrusions. The realisable transverse dimensions (here: the chord) are considerably greater at plastic pulltrusions than at aluminum extrusions and sufficient for the machines meant here. The dies for pulltrusion can be manufactured in a cheaper way than those for extrusion. The power consumption in the product is considerably lower. The product is as smooth as the die in which it is made, has a closed wind and weather resistant surface, does not corrode and lasts for decades, without any form of upkeep. Pulltrusion profiles as structural elements are applied in carriage works, in the airplane-construction and in strongly corroding surroundings in the process and agrarian industry.

When pulltruding torsioned boxlike profiles both the outer and inner die should be torsioned regularly in the tensile direction.

Particular co-rotating provisions should be made on the receipt of the product (between fitting rollers), which provisions, however, will cause little rise of expenses.

The blades can be fastened to the hub in such a way, that they can be adjusted about their longitudinal axis (running through and coinciding with the torsion axis $M_T$ perpendicular on the drawing) during rotation of the turbine or the fan. An embodiment with non-adjustable fastening is also within the scope of the invention, but is of course, much simplier. A circle is drawn having $M_T$ as centre. This circle represents the greatest diameter of the axis material from which inside the hub the wing adjusting axis is made and of which outside the hub so much material is planed away or milled that a flattened stump is created, which fits precisely in the profile extrusion. In order to fit precisely said stump is torsioned after heating in hot condition only so much about its centerline that its torsion corresponds with that of the profile 2. Connection of stump and profile takes place by machine screws having heads which are countersunk in the profile wall. The stump is so long that all loads are received by the connection. Between stump and profile wall thermosetting paste is provided. After the connection has been finished the hollow space within the wing is preferably injected with hard foam, e.g. polyurethane foam, which contributes considerably to the fold rigidity and contributes in a certain way to the bending and torsional rigidity of the blade. Moreover it acts very sound-damping.

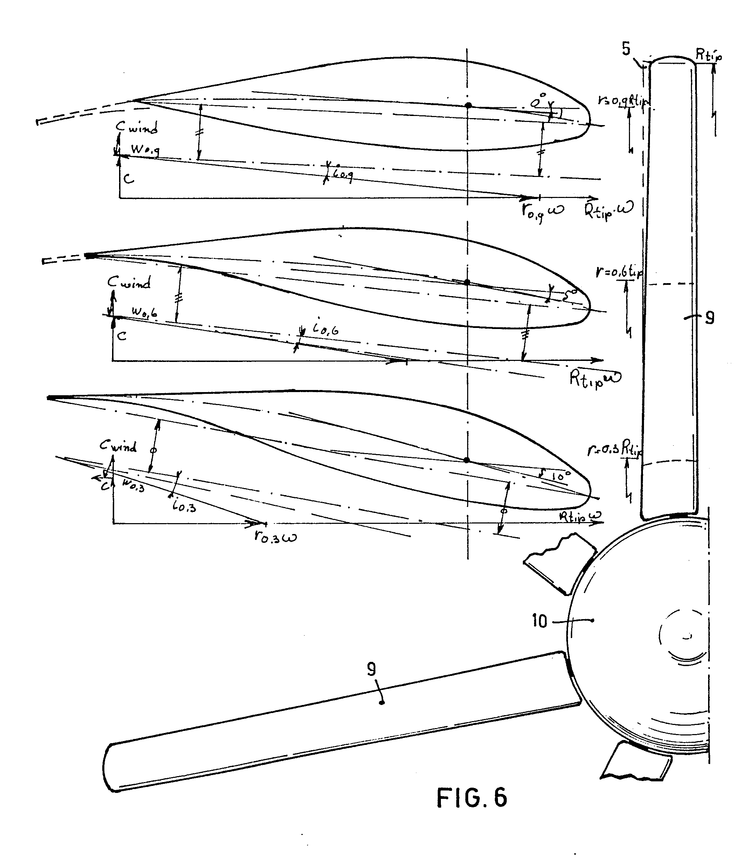

From figure 6 now a simple survey is given of the designing steps to be taken to be able to bring the invention in practice.

Suppose that one would dispose of a profile according to figure 2, which is an aerodynamically good profile (low resistance), of which particularly the function lift-angle of incidence (figure 3) is known. In figure 6 now the most extreme but still good profile is represented to show the method according to the invention more to full advantage. Therein it is to be seen that the smallest profile which can be made therefrom by sawing and grinding, has an aerodynamic standing plane in this case inclining $2.5^{\circ}$ with respect to that of the largest profile. The angle of incidence i, determining the $C_L$-values, should be taken with respect to said standing planes, not to a plane which is materially shape-limited.

The determination of the specific torsion

Suppose a seven-wing windturbine is concerned; having a blade diameter of 12 m and a nominal capacity of 34 KW at 10 m/sec., $\lambda = 8,0$ and $C_p = 0.48$. The blades 9 have a constant material torsion of $13.3^{\circ}$ along the wing-span, so $2.8^{\circ}/m$.

Suppose a hub 10 with a thickness of about 20 % of the tip diameter. This results in a non-neglectable increase of the meridian velocity near to the hub, which can be calculated relatively simply for an almost spherical hub cover. This is incorporated in the velocity diagrams, as well as the peripheral component $c_U$ behind

said wing, which can be calculated with "Euler" on all radii. Half of said peripheral component, which has a non-neglectable value only on the hub, should be incorporated in the diagrams, which follows from the "impulse rule". Up to this everything is the usual state of the art yet.

Now the relative velocities in magnitude and direction can be determined on all radii for a certain rotation speed $\lambda$ (the ratio between tip - peripheral velocity and wind velocity). In the shown example a $\lambda$ of 8 is chosen, which results in an almost optimum turbine, but a $\lambda$ of 7 or 9 will satisfy too.

With the $\lambda$, the $C_U$ and the c-division we know everything of the relative velocities now. The angles of incidence i, once more, should be taken with respect to these relative velocities. As remarked already said aerodynamic angle of incidence may vary up to $2.5^{\circ}$ from the material one according as nothing or just more is removed from the tail.

With a hub of 20 % the wing length is 80 % of the tip radius. In the wing now three annular sections are made: one on 10 % outside the (so 30 % from the axis), one half-way the wing (so 60 % from the axis), and one on 10 % from the tip (so 90 % from the axis). Said sections in figure 6 are mentioned 0.3, 0.6 and 0.9. If it would succeed to optimalize the aerodynamic situation on each location by means of the invented method, then one may suppose that the one therebetween is alright too. Not everything on the hub and tip itself can be predicted with certainty, they are removed only 10 % from the locations 0.3 and 0.9 and a little thing may be left to the wind. Other the number of three sections has only be chosen for ease of survey. For serious designing a number between 5 and 9 should be chosen.

-13-

Further the following steps can be distinguished:

1. Determine on location 0.3 the stand-angle $\beta = \delta - i$ for the full profile and that for a great lift coefficient, e.g. $C_L = 1.2$. That approximates over-drawing, but on the hub one can afford somewhat owing to the mutual influencing of the wings and the centrifugal effect on retarding limiting layers. From the diagram an angle of incidence $i_{0.3}$ follows for the chosen $C_{L\ 0.3}$.

2. Do the same for location 0.9, so near to the tip. The choice $C_L$ is no longer free. Calculate for the shortest profile and use the shorter chord for the calculation of $C_L$. For a wing with constant circulation from hub to tip (an attractive starting point) it applies that the product of lift coefficient, chord and radius is constant. So we find $C_L$ on location 0.9 from the values on location 0.3 and this $C_{L\ 0.9}$ requires an angle of incidence $i_{0.9}$ which is taken with respect to the stand-line of the large profile which is rotated over $2.5^{\circ}$. We plot same on the position of the relative velocity on 0.9 and this gives us a material position of the profile on location 0.9. The torsion between location 0.3 and 0.9 is determined therewith for the time being: the difference between the material position angles of the profiles on locations 0.3 and 0.9 is the torsion 0.3 - 0.9.

3. If the provisionally found torsion is constant along the wing, then the material position-angle of location 0.6 is fixed thereby: for, half-way the blade means half-way the torsion. On location 0.6 in the same way a number of combinations of $C_L$ and chord can be tried from $C_L$ x chord x radius = constant, as long as the material position-angle resulting therefrom fits in with the half torsion angle which is forcedly present there. That is iteratively sawing on paper. There are only small margins in $C_L$ x chord.

4. Suppose that this iteration procedure succeeds all at once, then the blade is designed. If we do not succeed we should start all over by putting on an new $C_L$-value or location 0.3 and get through the whole algorithm again, until the result fits in on

-14-

$\pm\ 0.5^{\circ}$. This tolerance is permitted in view of the gust character of the wind, the variation of the wind velocity along the height and the deformation of the wing owing to wind and centrifugal load. It is not certain beforehand that this repeated iteration procedure will converge. In case of divergence another profile should be designed and then one should try again if it will converge. That could be translated into a calculating program, but that seems great and expensive. The most easy way is plotting: it can be seen earlier than with a calculator whether there is convergence or not. Finally there is not question of only one turbine, but of the base for a series, so that this whole operation for capacities between 10 and 100 kW nominally has to be done only two or three times.

It is surprising that from different starting points it always appears that the so found material torsion along the full wing length of a windturbine is never more than $14^{\circ}$ and never less than $8^{\circ}$. A torsion difference of $6^{\circ}$ along the full wing is little, indeed, but just enough to make expect that wing standardization could be realised for very different turbines. By choosing a torsion of $14^{\circ}$ for the largest of a series of turbines and a torsion of $8^{\circ}$ for the smallest one, it can be calculated that the diameters of these turbines will relate to one another as 1 : 1.675 and the capacities, at the same wind velocity, as about 1 : 2.8. With two types of wing profile it would be possible to cover a capacity range of 1 : 8 without an all too large gap between the turbine types. And all those are almost optimally operating machines, having a capacity factor of about 0.45, which seems to be a very attractive market aspect.

-1-

CLAIMS

1. A method for manufacturing blades for axial fans and axial windturbines, in which the curvature and chord length of the wing profile vary along the wing radius in such a way, that the position of a fixed common coordinate in the profiles shows a continuous distributed torsion, characterized in that a profile with maximum curvature $(\phi)$, a chord $(t)$ with a constant torsion and a constant section is continuously manufactured from e.g. glass-reinforced plastic, and that the required curvature, the required chord, and the required correction to the position angle are obtained by modification of a relatively small part of the tail (5) of the profile.

2. A method according to claim 1, characterized in that the continuous manufacture takes place by torsioned pulltrusion of a glass-reinforced plastic.

3. A method according to claim 1, characterized in that the continuous manufacture takes place by extrusion of a kneadable aluminium alloy.

4. A method according to any of the claims 1-3, characterized in that the continuously manufactured profile is received by fitting rollers.

5. A method according to claim 1 or 3, characterized in that the continuous manufacture takes place by extrusion and the subsequent deformation with a regulat torsion is carried out after the extrusion.

6. Windturbine or fan provided with one or more blades cut on the right wing length according to any of the preceding claims, characterized in that the centerline of the axis stump coincides with the line of connection of centres ($M_T$) with a constant torsion.

7. Device according to claim 6, characterized in that the hollow cavity of the wing is injected with hard foam.

8. Device according to claim 7, characterized in that the hollow cavity of the wing is injected with polyurethane foam.

9. Method and products as represented in the drawing and/or discussed therefrom.

HV/MN/LvdM

FIG. 1

windturbine    ventilator

FIG. 5

FIG. 4

FIG. 3

FIG. 2

FIG. 6

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | AEROMODELLER, March 1979, page 148, Model & Allied Publications Ltd., Hemel, Hempstead, Herts, G.B. "Orange box" * Page 148, column 2, lines 21-29 * | 1,9 | F 03 D 1/06 |
| | --- | | |
| A | AEROMODELLER, April 1978, pages 194-195, Model & Allied Publications Ltd., Hemel, Hempstead, Herts, G.B. "Peter Tindal's chipmonk nats stunt champ" * Page 194, column 1, line 16 - page 195, line 34 * | 1,9 | |
| | --- | | |
| A | US-A-3 556 888 (GLASTRUSIONS) * Abstract * | 2 | |
| | --- | | TECHNICAL FIELDS SEARCHED (Int. Cl. ³) |
| A | US-A-2 389 876 (SEQUIN) * Whole description * | 2,3 | F 03 D<br>B 21 C |
| | --- | | |
| A | FR-A-1 194 471 (ROLLS-ROYCE) * Page 1, lines 1-49 * | 5 | |
| | --- | | |
| A | DE-A-2 746 189 (FRIEDEL) * Page 2, line 24 - page 3, line 21 * | 7,8 | |
| | ----- | | |

The present search report has been drawn up for all claims

| Place of search | Date of completion of the search | Examiner |
|---|---|---|
| THE HAGUE | 02-11-1983 | DE WINTER P.E.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82